# EUROPÄISCHE PATENTSCHRIFT

(11) **EP 2 223 070 B1**
(45) Veröffentlichungstag und Bekanntmachung des Hinweises auf die Patenterteilung: **20.06.2012**
(21) Anmeldenummer: 08861996.0
(22) Anmeldetag: 12.12.2008
(51) Int. Cl.: G01L 9/00, G01L 19/06

(54) **DIFFERENZDRUCKMESSZELLE**
DIFFERENTIAL PRESSURE MEASURING CELL
CELLULE DE MESURE DE PRESSION DIFFERENTIELLE

(30) Priorität: 17.12.2007 DE 102007061184
(43) Veröffentlichungstag der Anmeldung: 01.09.2010
(73) Patentinhaber: Endress + Hauser GmbH + Co. KG., 79689 Maulburg (DE)
(72) Erfinder: DANNHAUER, Wolfgang, 06792 Sandersdorf (DE); PHILIPPS, Michael, 79539 Lörrach (DE); SCHWABE, Friedrich, 14532 Kleinmachnow (DE); STOLZE, Dieter, 14469 Potsdam (DE); THAM, Anh Tuan, 10243 Berlin (DE)
(74) Vertreter: Andres, Angelika Maria
(86) Internationale Anmeldenummer: PCT/EP2008/067369
(87) Internationale Veröffentlichungsnummer: WO 2009/077433

(56) Entgegenhaltungen:
- WO-A-85/02676
- US-A- 5 992 240
- US-A1- 2005 235 753
- US-B2- 7 188 528

## Beschreibung

Die vorliegende Erfindung betrifft eine Differenzdruckmesszelle zum Erfassen der Druckdifferenz zwischen einem ersten Druck und einem zweiten Druck, umfasst: eine elastische Messanordnung mit mindestens einer Messmembran, die Silizium aufweist; mindestens einem Trägerkörper, der mit der elastischen Messanordnung druckdicht verbunden ist; einen ersten hydraulischen Pfad, um einen ersten Druck auf einen ersten Oberflächenabschnitt der elastischen Messanordnung zu übertragen; einen zweiten hydraulischen Pfad, um einen zweiten Druck auf einen zweiten Oberflächenabschnitt der elastischen Messanordnung zu übertragen, wobei der erste Druck dem zweiten Druck entgegenwirkt, und die elastische Auslenkung der Messanordnung ein Maß für die Differenz zwischen dem ersten und dem zweiten Druck ist, wobei die Differenzdruckmesszelle ferner mindestens eine hydraulische Drossel aufweist, poröses Silizium umfasst.

Eine solche Differenzdruckmesszelle ist aus der US 7 188 528 B2 bekannt. Ähnliche Differenzdruckmesszellen werden in der WO 2004/042338 A1 und DE 10 2004 033 813 A1 offenbart.

Die erfindungsgemäße Differenzdruckmesszelle umfasst die Merkmale des Anspruchs 1, und kennzeichnet sich dadurch, dass die Differenzdruckmesszelle eine zweite hydraulische Drossel aufweist, welche poröses Silizium umfasst, wobei der zweite hydraulische Pfad durch die zweite hydraulische Drossel verläuft.

In einer ersten Ausgestaltung der Erfindung weist die elastische Messanordnung eine Messmembran auf, die zwischen einem ersten Trägerkörper und einem zweiten Trägerkörper angeordnet und mit beiden Trägerkörpern jeweils entlang einer umlaufenden Fügestelle druckdicht verbunden ist, und wobei der erste und der zweite hydraulische Pfad jeweils mindestens einen Kanal durch einen der Trägerkörper umfassen.

In einer Weiterbildung dieser Ausgestaltung der Erfindung umfasst die mindestens eine hydraulische Drossel eine poröse Si-Schicht, welche eine Kanalmündung an einer der Messmembran abgewandten Oberfläche eines Trägerkörpers umgibt, und eine hydraulisch dichte Deckschicht, welche die poröse SI-Schicht bis auf mindestens eine Eintrittsöffnung abdeckt, die von der Kanalmündung lateral beabstandet ist, so dass der hydraulische Pfad von der mindestens einen Eintrittsöffnung durch die poröse Si-Schicht in der Ebene der porösen Si-Schicht zur Kanalmündung verläuft.

Hierbei können der erste Trägerkörper und der zweite Trägerkörper jeweils auf ihren der Messmembran abgewandten Oberflächen eine hydraulische Drossel mit einer porösen Si-Schicht und einer Deckschicht aufweisen, die jeweils eine Kanalmündung umgibt.

In einer anderen Weiterbildung der ersten Ausgestaltung der Erfindung, kann die hydraulische Drossel realisiert werden, indem mindestens ein Kanal durch den Trägerkörper poröses Silizium aufweist.

Sofern die hydraulische Drossel durch eine poröse Schicht realisiert werden soll, weist die poröse Si-Schicht beispielsweise eine Stärke von nicht mehr als 20 Mikrometern, vorzugsweise nicht mehr als 10 Mikrometern aufweist. Die poröse Si-Schicht weist weiterhin eine Stärke von beispielsweise nicht weniger als 2 Mikrometern, vorzugsweise nicht weniger als 4 Mikrometern auf.

In einer derzeit bevorzugten Ausgestaltung der Erfindung beträgt die Porengröße des porösen Siliziums beispielsweise nicht mehr als 100 Nanometer, vorzugsweise nicht mehr als 50 Nanometer beträgt. Andererseits ist es derzeit bevorzugt, dass die Porengröße nicht weniger als 10 Nanometer, vorzugsweise nicht weniger als 20 Nanometer beträgt.

In derzeit betrachteten Ausgestaltungen der Erfindung weist der Trägerkörper Silizium oder Glas auf.

In einer Weiterbildung der Erfindung Umfasst die Differenzdruckmesszelle auch einen Schutz gegen einseitige statische Überlasten. Dies wird dadurch realisiert, dass eine Messmembran im Falle einer einseitigen Überlast an einem Trägerkörper zumindest abschnittsweise zur Anlage kommt und von diesem abgestützt wird.

Bei Differenzdruckmesszellen mit einer Messmembran zwischen zwei Trägerkörpern, können beide Trägerkörper so ausgestaltet sein, dass sie jeweils einen Überlastschutz gegen einseitige statische Überlasten umfassen.

Gleichermaßen können bei jener Ausgestaltung der Erfindung, bei welcher die elastische Messanordnung eine erste Messmembran und eine zweite Messmembran umfasst, wobei die erste Messmembran an einen ersten Oberflächenabschnitt des Trägerkörpers entlang einer umlaufenden Fügestelle druckdicht befestigt ist, die zweite Messmembran an einem zweiten Oberflächenabschnitt des Trägerkörpers entlang einer umlaufenden Fügestelle druckdicht befestigt ist, und wobei zwischen der ersten und der zweiten Messmembran ein dritter hydraulischer Pfad verläuft, um die erste und die zweite Messmembran hydraulisch zu koppeln, wobei die hydraulische Drossel in dem dritten hydraulischen Pfad angeordnet ist, der erste Oberflächenabschnitt und der zweite Oberflächenabschnitt so gestaltet sein dass im Falle einer einseitigen statischen Überlast, die auf die erste bzw. zweite Messmembran einwirkt, die von der Überlast betroffene Messmembran an der jeweiligen Oberfläche zumindest abschnittsweise zur Anlage kommt und von der Oberfläche abgestützt wird.

Die Erfindung wird nun anhand der in den Zeichnungen dargestellten Zeichnungen erläutert. Es zeigt:
- Fig. 1:: einen Längsschnitt durch ein erstes Ausführungsbeispiel eines erfindungsgemäßen Differenzdrucksensors;
- Fig. 2:: eine Aufsicht auf das Ausführungsbeispiel eines erfindungsgemäßen Differenzdrucksensors aus Fig. 1;
- Fig. 3:: einen Längsschnitt durch ein zweites Ausführungsbeispiel eines erfindungsgemäßen Differenzdrucksensors;
- Fig. 4:: einen Längsschnitt durch ein drittes Ausführungsbeispiel eines erfindungsgemäßen Differenzdrucksensors; und
- Fig. 5:: eine Ansicht von porösem Silizium, wie es bei den erfindungsgemäßen Differenzdrucksensoren zum Einsatz kommt.

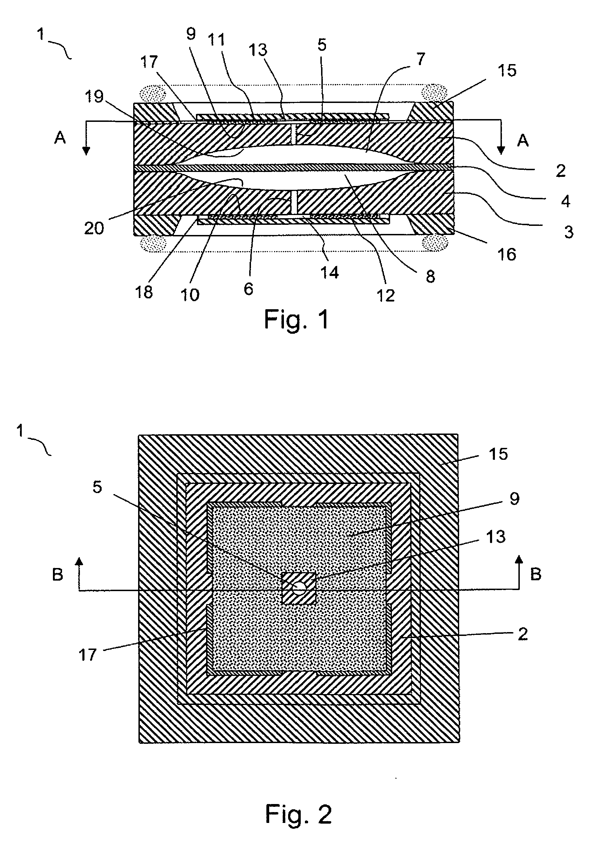

Der erfindungsgemäße Differenzdrucksensor 1 in Fign. 1 und 2 umfasst einen ersten Trägerkörper 2, einen zweiten Trägerkörper 3, und eine Messmembran 4, die zwischen den beiden Trägerkörpern angeordnet ist. Die Messmembran 2 umfasst vorzugsweise ein Halbleitermaterial, insbesondere Silizium, während der erste und der zweite Trägerkörper Glas oder ein Halbleitermaterial aufweisen können, wobei ein Halbleitermaterial, insbesondere Silizium derzeit bevorzugt ist.

Die Messmembran 4 ist auf ihrer ersten Seite durch eine erste Öffnung 5 durch den ersten Trägerkörper 2, die in einer ersten Druckkammer 7 mündet, die zwischen dem ersten Trägerkörper 2 und der Messmembran 4 gebildet ist, mit einem ersten Druck beaufschlagbar. Weiterhin ist die Messmembran 4 auf ihrer zweiten Seite, die der ersten Seite gegenüberliegt, durch eine zweite Öffnung 6 durch den zweiten Trägerkörper 3, die in einer zweiten Druckkammer 8 mündet, die zwischen dem zweiten Trägerkörper 3 und der Messmembran 4 gebildet ist, mit einem zweiten Druck beaufschlagbar, so dass der zweite Druck dem ersten Druck entgegenwirkt und die resultierende Auslenkung der Messmembran 3 ein Maß für die Differenz zwischen dem ersten und dem zweiten Druck ist.

Der erste und der zweite Druck werden vorzugsweise jeweils mittels eines hydraulischen Pfades, der eine Übertragungsflüssigkeit enthält zum Drucksensor übertragen, wozu der Drucksensor insbesondere in ein dem Fachmann geläufiges hydraulisches Messwerk eingebaut sein kann, welches Trennmembranen aufweist, welche die hydraulischen Pfade abschließen, und auf welche die zu erfassenden Drücke einwirken.

Der Drucksensor 1 umfasst weiterhin einen hier nicht näher dargestellten Wandler, der die Auslenkung der Messmembran 4 in ein elektrisches Signal wandelt. Der Wandler kann einen kapazitiver Wandler umfassen, der jeweils die Kapazität zwischen einer Trägerkörperseitigen Elektrode und einer Messmembranseitigen Elektrode auswertet, oder einen resistiven Wandler, wozu die Messmembran beispielsweise eine oder mehrere piezoresistive Brückenschaltungen oder andere Brückenschaltungen mit verformungsabhängigen Widerständen umfassen kann.

Erfindungsgemäß ist der Drucksensor 1 mit einem integrierten Überlastschutz versehen, so dass idealer Weise auf zusätzliche Überlastschutzvorrichtungen im hydraulischen Messwerk verzichtet werden kann. Zur Erläuterung des Aufbaus des Überlastschutzes zeigt Fig. 2 eine Aufsicht auf den Drucksensor entlang der Linie A-A in Fig. 1, wobei die Schnittansicht aus Fig. 1 entlang der Linie B-B in Fig. 2 verläuft.

Zum Dämpfen von pulsartigen Überlasten umfasst der erfindungsgemäße Drucksensor 1 eine erste Drosselvorrichtung, welche eine erste Dämpferschicht 9, die poröses Silizium aufweist, und mit einer ersten Abdeckplatte 11 umfasst, wobei die erste Dämpferschicht die erste Öffnung 5 zur ersten Druckkammer umschließt. Weiterhin umfasst der erfindungsgemäße Drucksensor 1 eine zweite Drosselvorrichtung, welche eine zweite Dämpferschicht 10, die poröses Silizium aufweist, und mit einer zweiten Abdeckplatte 12 umfasst, wobei die zweite Dämpferschicht die zweite Öffnung 6 zur zweiten Druckkammer umschließt. Bei dieser Anordnung verlaufen die hydraulischen Pfade zu den Druckkammern durch die jeweilige Dämpferschicht, wobei pulsartige Druckspitzen durch Streuung in dem porösen Material, insbesondere Silizium, hinreichend bedämpft werden.

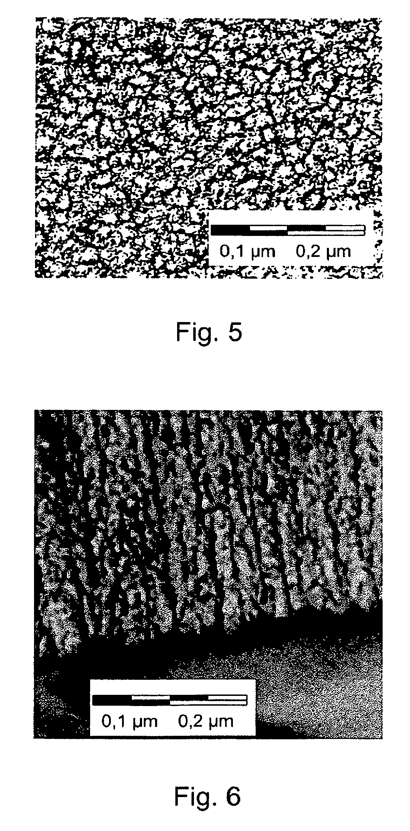

Poröses Silizium ist eine Form des chemischen Elementes Silizium, welches ein extremes Oberfläche/Volumen-Verhältnis besitzt (einige hundert m²/cm³). Elektrochemische Ätzung (engl. ECE) mit HF-Ethanol-Elektrolyt wird gewöhnlich zur Herstellung von porösem Silizium verwendet, vorzugsweise bei geringer Stromdichte und hoher HF-Konzentration. Nach dem Ätzen bleibt ein feines gebundenes Netzwerk von Submikroporen zurück. Die Poren propagieren vorzugsweise entlang der kristallographischen <100>-Richtung. Die feine Kontrolle des Ätzprozesses ermöglicht eine sehr gute Steuerung der Eigenschaften des porösen Netzwerkes mit hoher Wiederholbarkeit. Durch eine Änderung des elektrochemischen Stroms, die Zusammensetzung des Elektrolyts oder der Dotierungsart der Wafer kann man den durchschnittlichen Durchmesser der Poren von einigen Nanometern bis zu mehreren Mikrometern (gut steuerbare Größe: von 2 bis 2000 nm) einstellen. Ferner kann man auch ein Multischichtsystem aus porösem Silizium mit unterschiedlicher Porosität z.B. durch eine periodische Variierung der Stromdichte während des Ätzprozesses herstellen. Bei Bedarf ist es auch möglich, das Multischichtsystem aus dem restlichen Material durch einen pulsierenden Strom zu lösen. Exemplarische Abbildungen zu porösem Silizium sind in Fign. 5 und 6 gezeigt.

Zur Dimensionierung der Bedämpfung kann neben der Porengröße in der Dämpferschicht ggf. die Größe von Öffnungen in einer ggf. vorgesehenen Umrandung 17, 18 der Dämpferschicht 9, 10 herangezogen werden, wobei die Abdeckplatten 11, 12, jeweils dicht an die Umrandung anschließen. Weiterhin kann die Bedämpfung durch eine ggf. vorgesehene Aussparung 13, 14 im Zentrum der Dämpferschicht 13, 14 reduziert werden, wobei durch die Aussparung die effektive Länge der Bedämpfungsstrecke reduziert wird.

Bei der Gestaltung der Aussparung ist darauf zu achten, dass die Abdeckplatte in dem Bereich der Aussparung nicht als eine Membran wirken kann über die ein Druckimpuls unter Umgehung der unter Dämpferschicht in die Druckkammern eingekoppelt werden kann. Insoweit kann eine Aussparung auch andere Forman aufweisen, beispielsweise schmale Schlitze bzw. Kanäle, die sich in die Dämpferschicht hinein erstrecken.

Zur Einfassung des Drucksensors 1 sind noch ein erster Deckkörper 15 und ein zweiter Deckkörper 16 vorgesehen, welche an gegenüberliegenden Außenfläche der beiden Trägerkörper 2 und 3 angeordnet sind, und welche das jeweilige Dämpferelement seitlich umschließen, wobei die beiden Deckkörper jeweils Anschlussflächen aufweisen, über welche die Hydraulischen Pfade eines hydraulischen Messwerks druckdicht an den Drucksensor 1 angeschlossen werden können, wie durch punktiert dargestellte Dichtelemente angedeutet sein soll.

Zum Schutz gegen statische Überlasten können die ersten und zweiten Trägerkörper 2, 3, Membranbetten 19, 20, aufweisen, an denen die Messmembran jeweils im Falle einer einseitigen Überlast zumindest abschnittsweise zur Anlage kommen kann, um abgestützt zu werden.

Die beschriebene Konstruktion ist vorzugsweise im wesentlichen komplett aus Silizium gefertigt, wobei ebenfalls ist eine Sandwichkonstruktion Si-Glas-Si-Glas-Si möglich ist. Der Aufbau erfolgt auf Waferlevel im Batch-Prozess, beispielsweise über SFB (Silicon Fusion Bonding), oder eutektisch im Falle eines reinen Si-Aufbaus oder anodisch bei Si-Glas-Grenzflächen. Die kapillaren Kanäle der ersten und zweiten Öffnungen bzw. weiterer Öffnungen und Aussparungen auf und durch Silizium können geätzt werden, vorzugsweise trocken chemisch (DRIE). Feines, poröses Silizium wird standardmäßig über Lithographie nasschemisch hergestellt. Die Tiefe des porösen Siliziums ist schon bei wenigen µm bis einigen 10 µm ausreichend.

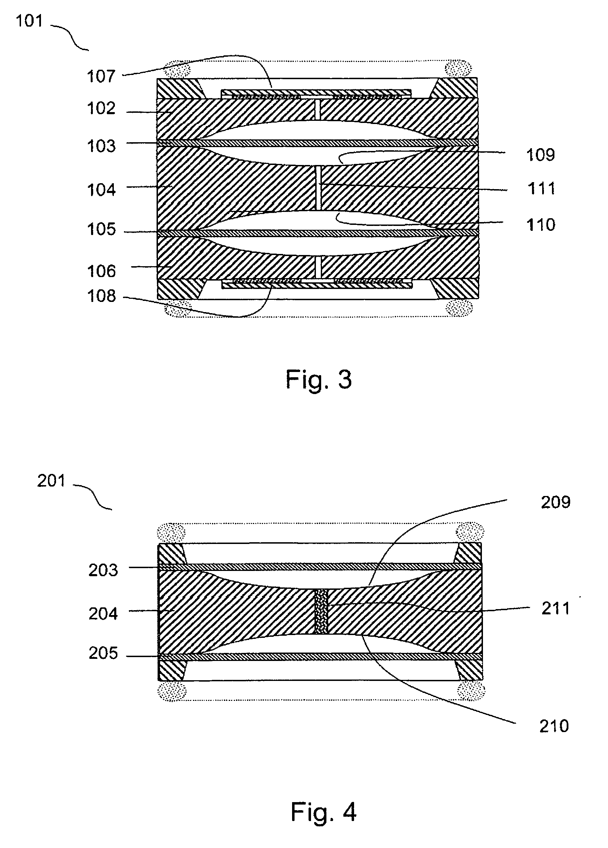

Fig. 3 zeigt ein zweites Ausführungsbeispiel eines erfindungsgemäßen Differenzdrucksensors 101, welcher einen ersten Trägerkörper 102, eine erste Messmembran 103, einen zweiten Trägerkörper 104, eine zweite Messmembran 105 und einen dritten Trägerkörper 106 in der genannten Reihenfolge umfasst. Die Druckbeaufschlagung der ersten Messmembran erfolgt über eine erste Öffnung im ersten Trägerkörper und die Druckbeaufschlagung der zweiten Messmembran erfolgt über eine zweite Öffnung im dritten Trägerkörper, wobei die erste und die zweite Öffnung jeweils über ein erstes Dämpferelement 107 bzw. ein zweites Dämpferelement 108 mit einem ersten bzw. zweiten hydraulischen Pfad zur Druckeinleitung kommunizieren. Hinsichtlich der Einzelheiten der Dämpferelemente, ihrer Dimensionierung und Abdeckung gelten die Ausführungen zum ersten Ausführungsbeispiel entsprechend.

Im zweiten Trägerkörper 104 sind in den den beiden Messmembranen zugewandten Stirnseiten jeweils Aussparungen vorgesehen, welche zusammen eine zentrale Druckkammer mit einer ersten Teilkammer 109 und einer zweiten Teilkammer 110 bilden, wobei die Teilkammern mittels einer zentralen Öffnung 111 durch den zweiten Trägerkörper 104 hydraulisch gekoppelt sind, und wobei die beiden Teilkammern 109, 110 nach außen hin jeweils von einer Messmembran 103, 105 verschlossen sind.

Die Wände der Teilkammern 109, 110 können wie zuvor beim ersten Ausführungsbeispiel beschrieben zur Abstützung der Messmembranen bei statischen Überlasten dienen.

Die zentrale Druckkammer ist über einen hier nicht im einzelnen dargestellten Kanal mit einer Hydraulikflüssigkeit gefüllt, um die beiden Messmembranen 103, 105 zu koppeln. Zum elektrischen Erfassen der Auslenkung der Messmembranen ist an mindestens einer Messmembran vorzugsweise jeweils an beiden Messmembranen ein Wandler vorgesehen, wie im Zusammenhang mit dem ersten Ausführungsbeispiel erörtert wurde.

Fig. 4 zeigt einen Differenzdrucksensor, welcher kein Ausführungsbeispiel der beanspruchten Erfindung ist. Dieser Differenzdrucksensor 201 umfasst eine erste Messmembran 203, einen Trägerkörper 204 und eine zweite Messmembran 205. Die Druckbeaufschlagung der ersten Messmembran erfolgt über einen ersten hydraulischen Pfad und die Druckbeaufschlagung der zweiten Messmembran erfolgt über einen zweiten hydraulischen Pfad.

Im Trägerkörper 204 sind in den den beiden Messmembranen zugewandten Stirnseiten jeweils Aussparungen vorgesehen, welche zusammen eine zentrale Druckkammer mit einer ersten Teilkammer 209 und einer zweiten Teilkammer 210 bilden, wobei die Teilkammern mittels einer zentralen Öffnung 211 durch den Trägerkörper 204 hydraulisch gekoppelt sind, und wobei die beiden Teilkammern 209, 210 nach außen hin jeweils von einer Messmembran 203, 205 verschlossen sind.

Die zentrale Öffnung 211 weist zur Bedämpfung dynamischer Überlasten poröses Silizium auf.

Die Wände der Teilkammern 209, 210 können wie zuvor beim ersten Ausführungsbeispiel beschrieben zur Abstützung der Messmembranen bei statischen Überlasten dienen.

Die zentrale Druckkammer ist über einen hier nicht im einzelnen dargestellten Kanal mit einer Hydraulikflüssigkeit gefüllt, um die beiden Messmembranen 203, 205 zu koppeln. Zum elektrischen Erfassen der Auslenkung der Messmembranen ist an mindestens einer Messmembran, vorzugsweise jeweils an beiden Messmembranen ein Wandler vorgesehen, wie im Zusammenhang mit dem ersten Ausführungsbeispiel erörtert wurde.

## Patentansprüche

1. Differenzdruckmesszelle (1; 101; 201) zum Erfassen der Druckdifferenz zwischen einem ersten Druck und einem zweiten Druck, umfassend:
- eine elastische Messanordnung mit mindestens einer Messmembran (4; 103; 105; 203; 205) die Silizium aufweist;
- mindestens einem Trägerkörper (2; 5; 102; 104; 106; 204) der mit der elastischen Messanordnung druckdicht verbunden ist;
- einen ersten hydraulischen Pfad, um einen ersten Druck auf einen ersten Oberflächenabschnitt der elastischen Messanordnung zu übertragen; und
- einen zweiten hydraulischen Pfad, um einen zweiten Druck auf einen zweiten Oberflächenabschnitt der elastischen Messanordnung zu übertragen,
- wobei der erste Druck dem zweiten Druck entgegenwirkt, und die elastische Auslenkung der Messanordnung ein Maß für die Differenz zwischen dem ersten und dem zweiten Druck ist,
- wobei die Differenzdruckmesszelle eine erste hydraulische Drossel (9; 107) aufweist, welche poröses Silizium umfasst, und wobei der erste hydraulische Pfad durch die erste hydraulische Drossel verläuft,
- **dadurch gekennzeichnet, dass** die Differenzdruckmesszelle eine zweite hydraulische Drossel (10; 108) aufweist, welche poröses Silizium umfasst, wobei der zweite hydraulische Pfad durch die zweite hydraulische Drossel verläuft.

2. Differenzdruckmesszelle nach Anspruch 1, wobei die elastische Messanordnung eine Messmembran (4) aufweist, die zwischen einem ersten Trägerkörper (2) und einem zweiten Trägerkörper (3) angeordnet und mit beiden Trägerkörpern jeweils entlang einer umlaufenden Fügestelle druckdicht verbunden ist, und wobei der erste und der zweite hydraulische Pfad jeweils mindestens einen Kanal durch einen der Trägerkörper umfassen.

3. Differenzdruckmesszelle nach Anspruch 2, wobei die mindestens eine hydraulische Drossel (9; 10) eine poröse Si-Schicht umfasst, welche eine Kanalmündung an einer der Messmembran abgewandten Oberfläche eines Trägerkörpers umgibt, und eine hydraulisch dichte Deckschicht (11, 12), welche die poröse SI-Schicht bis auf mindestens einer Eintrittsöffnung abdeckt, die von der Kanalmündung lateral beabstandet ist, so dass der hydraulische Pfad von der mindestens einen Eintrittsöffnung durch die poröse Si-Schicht in der Ebene der porösen Si-Schicht zur Kanalmündung verläuft.

4. Differenzdruckmesszelle (1) nach Anspruch 3, wobei der erste Trägerkörper (2, 3) und der zweite Trägerkörper jeweils auf ihren der Messmembran (4) abgewandten Oberflächen eine hydraulische Drossel (9, 10) mit einer porösen Si-Schicht und einer Deckschicht (11, 12) aufweisen, die jeweils eine Kanalmündung umgibt.

5. Differenzdruckmesszelle nach Anspruch 2, wobei mindestens ein Kanal durch den Trägerkörper poröses Silizium aufweist.

6. Differenzdruckmesszelle nach Anspruch 3 oder einem davon abhängigen Anspruch, wobei die poröse Si-Schicht eine Stärke von nicht mehr als 20 Mikrometern, vorzugsweise nicht mehr als 10 Mikrometern aufweist.

7. Differenzdruckmesszelle nach Anspruch 3 oder einem davon abhängigen Anspruch, wobei die poröse Si-Schicht eine Stärke von nicht weniger als 2 Mikrometern, vorzugsweise nicht weniger als 4 Mikrometern aufweist.

8. Differenzdruckmesszelle nach einem der vorhergehenden Ansprüche, wobei die Porengröße des porösen Siliziums nicht mehr als 100 Nanometer, vorzugsweise nicht mehr als 50 Nanometer beträgt.

9. Differenzdruckmesszelle nach einem der vorhergehenden Ansprüche, wobei die Porengröße nicht weniger als 10 Nanometer, vorzugsweise nicht weniger als 20 Nanometer beträgt.

10. Differenzdruckmesszelle nach einem der vorhergehenden Ansprüche, wobei der Trägerkörper Silizium oder Glas aufweist.

11. Differenzdruckmesszelle nach einem der vorhergehenden Ansprüche wobei zumindest eine Messmembran im Falle einer einseitigen Überlast an einem Trägerkörper zumindest abschnittsweise zur Anlage kommt und von diesem abgestützt wird.

## Claims

1. Differential pressure measuring cell (1, 101, 201) designed to measure the pressure differential between a first pressure and a second pressure, comprising:
- an elastic measuring arrangement with at least one process isolating diaphragm (4, 103, 105, 203, 205), which comprises silicon;
- at least one support body (2, 5, 102, 104, 106, 204), which is connected to the elastic measuring arrangement in a pressure-tight manner;
- a first hydraulic path to transfer a first pressure to a first surface section of the elastic measuring arrangement; and
- a second hydraulic path to transfer a second pressure to a second surface section of the elastic measuring arrangement,
- wherein the first pressure acts against the second pressure and the elastic deflection of the measuring arrangement is an indicator of the difference between first and second pressure,
- wherein the differential pressure measuring cell has a first hydraulic restriction (9, 107), which comprises porous silicon, and wherein the first hydraulic path runs through the first hydraulic restriction,
- **characterized in that** the differential pressure measuring cell has a second hydraulic restriction (10, 108), which comprises porous silicon, wherein the second hydraulic path runs through the second hydraulic restriction.

2. Differential pressure measuring cell as claimed in Claim 1, wherein the elastic measuring arrangement has a process isolating diaphragm (4), which is arranged between a first support body (2) and a second support body (3) and is connected in a pressure-tight manner to both support bodies along a circumferential junction point, and wherein the first and second hydraulic path each comprises at least one channel through one of the support bodies.

3. Differential pressure measuring cell as claimed in Claim 2, wherein the one hydraulic restrictor (9, 10), at least, comprises a porous Si layer which surrounds a channel opening on a surface of the support body facing away from the process isolating diaphragm, and a hydraulically leak-tight cover layer (11, 12) which covers the porous Si layer apart from at least one entrance opening, which is at a lateral distance from the channel opening, in such a way that the hydraulic path runs from the one entrance opening, at least, through the porous Si layer in the plane of the porous Si layer as far as the channel opening.

4. Differential pressure measuring cell (1) as claimed in Claim 3, wherein on their surfaces facing away from the process isolating diaphragm (4) the first support body (2) and the second support body (3) both have a hydraulic restrictor (9, 10) with a porous Si layer and a cover layer (11, 12) which surrounds a channel opening.

5. Differential pressure measuring cell as claimed in Claim 2, wherein at least one channel through the support body comprises porous silicon.

6. Differential pressure measuring cell as claimed in Claim 3 or a claim that depends on Claim 3, wherein the porous Si layer has a thickness of not more than 20 micrometers and preferably not more than 10 micrometers.

7. Differential pressure measuring cell as claimed in Claim 3 or a claim that depends on Claim 3, wherein the porous Si layer has a thickness of not less than 2 micrometers and preferably not less than 4 micrometers.

8. Differential pressure measuring cell as claimed in one of the previous claims, wherein the pore size of the porous silicon does not exceed 100 nanometers, and preferably does not exceed 50 nanometers.

9. Differential pressure measuring cell as claimed in one of the previous claims, wherein the pore size is not less than 10 nanometers, and preferably not less than 20 nanometers.

10. Differential pressure measuring cell as claimed in one of the previous claims, wherein the support body comprises silicon or glass.

11. Differential pressure measuring cell as claimed in one of the previous claims, wherein - in the case of one-sided overload - at least one process isolating diaphragm comes to rest, at least partially, on the support body and is supported by said support body.

## Revendications

1. Cellule de mesure de pression différentielle (1, 101, 201) destinée à la mesure de la différence de pression entre une première pression et une deuxième pression, comprenant :
- une configuration de mesure élastique avec au moins une membrane de mesure (4, 103, 105, 203, 205), qui comprend du silicium ;
- au moins un corps-support (2, 5, 102, 104, 106, 204), lequel est relié de façon étanche à la pression avec la configuration de mesure élastique ;
- un premier circuit hydraulique destiné à transmettre une première pression à une première section superficielle de la configuration de mesure élastique ; et
- un deuxième circuit hydraulique destiné à transmettre une deuxième pression à une deuxième section superficielle de la configuration de mesure élastique,
- la première pression agissant contre la deuxième pression, et la déviation élastique de la configuration de mesure constituant une mesure de la différence entre la première et la deuxième pression,
- la cellule de mesure de pression différentielle comportant un restricteur hydraulique (9, 107), lequel comprend du silicium poreux, et le premier circuit hydraulique passant par le premier restricteur hydraulique,
- **caractérisée en ce que** la cellule de mesure de pression différentielle comporte un deuxième restricteur hydraulique (10, 108), lequel comprend du silicium poreux, le deuxième circuit hydraulique passant par le deuxième restricteur hydraulique.

2. Cellule de mesure de pression différentielle selon la revendication 1, pour laquelle la configuration de mesure élastique comporte une membrane de mesure (4), qui est disposée entre un premier corps-support (2) et un deuxième corps-support (3) et est reliée de façon étanche avec les deux corps-supports, respectivement le long d'un point de jonction périphérique, et pour laquelle le premier et le deuxième circuit hydraulique comprennent chacun au moins un canal à travers l'un des corps-supports.

3. Cellule de mesure de pression différentielle selon la revendication 2, pour laquelle l'au moins un restricteur hydraulique (9, 10) comprend une couche de silicium poreuse, laquelle entoure un débouché de canal sur une surface du corps-support située à l'opposé de la membrane de mesure, et une couche de recouvrement (11, 12) hydrauliquement étanche, laquelle recouvre la couche de silicium poreuse jusqu'à au moins une ouverture d'entrée, qui est distante latéralement du débouché de canal, de telle sorte que le circuit hydraulique s'étend de l'au moins une ouverture d'entrée à travers la couche de silicium poreuse, dans le plan de la couche de silicium poreuse, jusqu'au débouché de canal.

4. Cellule de mesure de pression différentielle (1) selon la revendication 3, pour laquelle le premier corps-support (2) et le deuxième corps-support (3) comportent chacun sur leurs surfaces situées à l'opposé de la membrane de mesure (4) un restricteur hydraulique (9, 10) doté d'une couche de silicium poreuse et d'une couche de recouvrement (11, 12), qui entoure respectivement un débouché de canal.

5. Cellule de mesure de pression différentielle selon la revendication 2, pour laquelle au moins un canal traversant le corps-support comprend du silicium poreux.

6. Cellule de mesure de pression différentielle selon la revendication 3 ou l'une des revendications dépendantes, pour laquelle la couche de silicium poreuse présente une épaisseur maximale de 20 microns, de préférence une épaisseur maximale de 10 microns.

7. Cellule de mesure de pression différentielle selon la revendication 3 ou l'une des revendications dépendantes, pour laquelle la couche de silicium poreuse présente une épaisseur minimale de 2 microns, de préférence une épaisseur minimale de 4 microns.

8. Cellule de mesure de pression différentielle selon l'une des revendications précédentes, pour laquelle la taille des pores du silicium poreux n'est pas supérieure à 100 nanomètres, de préférence pas supérieure à 50 nanomètres.

9. Cellule de mesure de pression différentielle selon l'une des revendications précédentes, pour laquelle la taille des pores du silicium poreux n'est pas inférieure à 10 nanomètres, de préférence pas inférieure à 20 nanomètres.

10. Cellule de mesure de pression différentielle selon l'une des revendications précédentes, pour laquelle le corps-support comprend du silicium ou du verre.

11. Cellule de mesure de pression différentielle selon l'une des revendications précédentes, pour laquelle, en cas de surcharge unilatérale, au moins une membrane de mesure entre au moins partiellement en butée contre un corps-support, et est soutenue par ce dernier.
